# EUROPÄISCHE PATENTSCHRIFT

(11) **EP 2 219 917 B1**
(45) Veröffentlichungstag und Bekanntmachung des Hinweises auf die Patenterteilung: **14.12.2011**
(21) Anmeldenummer: 08842205.0
(22) Anmeldetag: 02.10.2008
(51) Int. Cl.: B60T 17/02, F04C 18/344, F01C 21/08, F04C 29/00

(54) **VAKUUMPUMPE**
VACUUM PUMP
POMPE À VIDE

(30) Priorität: 24.10.2007 DE 102007052194
(43) Veröffentlichungstag der Anmeldung: 25.08.2010
(73) Patentinhaber: ixetic Hückeswagen GmbH, 42499 Hückeswagen (DE)
(72) Erfinder: RUDEL, Stev, 42499 Hückeswagen (DE)
(74) Vertreter: Brisch, Georg
(86) Internationale Anmeldenummer: PCT/EP2008/008347
(87) Internationale Veröffentlichungsnummer: WO 2009/052930

(56) Entgegenhaltungen:
- GB-A- 2 332 481
- US-A- 3 258 197

## Beschreibung

Die Erfindung betrifft eine Vakuumpumpe, insbesondere eine Flügelzellenpumpe, mit einem Rotor, der um eine Drehachse drehbar ist und durch den ein Flügel in einer, bezogen auf den Rotor, radialen Richtung hin und her bewegbar innerhalb einer Umlaufkontur geführt ist.

Derartige Vakuumpumpen werden zum Beispiel als Unterdruckpumpen zur Bremskraftunterstützung in Kraftfahrzeugen eingesetzt. Der Antrieb der Vakuumpumpe kann zum Beispiel durch den Rotor erfolgen. Eine gattungsgemäße Vakuumpumpe ist zum Beispiel aus der britischen Patentanmeldung GB 2 332 481 A bekannt. Aus dem US-Patent US 3,258,197 ist ein Kondensor mit Gebläseflügeln bekannt.

Aufgabe der Erfindung ist es, die Lebensdauer einer Vakuumpumpe, insbesondere einer Flügelzellenpumpe, mit einem Rotor, der um eine Drehachse drehbar ist und durch den ein Flügel in einer, bezogen auf den Rotor, radialen Richtung hin und her bewegbar innerhalb einer Umlaufkontur geführt ist, insbesondere bei hohen Drehzahlen, zu verlängern.

Die Aufgabe ist bei einer Vakuumpumpe, insbesondere einer Flügelzellenpumpe, mit einem Rotor, der um eine Drehachse drehbar ist und durch den ein Flügel in einer, bezogen auf den Rotor, radialen Richtung hin und her bewegbar innerhalb einer Umlaufkontur geführt ist, dadurch gelöst, dass der Flügel mit einer Exzentereinrichtung gekoppelt ist, die exzentrisch zu dem konstruktiven Mittelpunkt der Umlaufkontur angeordnet ist, und weiterhin durch dei merkmale des Anspruchs 1. In radialer Richtung ist der Flügel durch den Rotor hin und her bewegbar geführt. In Umfangsrichtung ist der Flügel innerhalb der Umlaufkontur geführt. Darüber hinaus ist der Flügel mit der Exzentereinrichtung gekoppelt. Die Freiheitsgrade des Flügels werden also durch die Exzentereinrichtung, durch die Linearführung des Rotors und durch die Umlaufkontur definiert. Durch die erfindungsgemäße Kopplung mit der Exzentereinrichtung werden Betriebsdrehzahlen der Vakuumpumpe ermöglicht, die größer als 5000 Umdrehungen pro Minute sind.

Ein bevorzugtes Ausführungsbeispiel der Vakuumpumpe ist dadurch gekennzeichnet, dass die Umlaufkontur an einem Gehäuseteil vorgesehen ist, das exzentrisch zu dem konstruktiven Mittelpunkt der Umlaufkontur drehbar ist. Der Rotor ist im konstruktiven Mittelpunkt der Umlaufkontur exzentrisch zur Drehachse des Gehäuseteils drehbar. Der Flügel ist im exzentrisch rotierenden Rotor und in der Umlaufkontur des rotierenden Gehäuseteils geführt. Die Massenverteilung der Vakuumpumpe kann vollständig am Gehäuse ausgeglichen werden.

Ein weiteres bevorzugtes Ausführungsbeispiel der Vakuumpumpe ist dadurch gekennzeichnet, dass die Umlaufkontur an einem Gehäuseteil vorgesehen ist, das um den konstruktiven Mittelpunkt der Umlaufkontur drehbar ist. Dann fällt eine ansonsten am Flügel realisierbare Untersetzung weg.

Ein weiteres bevorzugtes Ausführungsbeispiel der Vakuumpumpe ist dadurch gekennzeichnet, dass die Exzentereinrichtung ein Exzenterelement umfasst, das an den Mittelpunkt des Flügels angelenkt ist. Vorzugsweise liegt der Mittelpunkt auf der Symmetrieachse des Flügels. Bei einem Umlauf des Gehäuseteils überstreicht der exzentrisch rotierende Rotor einmal pro Pumpenumdrehung das ortsfeste Exzenterelement, das heißt, der Flügel rotiert um das Exzenterelement.

Ein weiteres bevorzugtes Ausführungsbeispiel der Vakuumpumpe ist dadurch gekennzeichnet, dass das Exzenterelement als Lagerzapfen für den Flügel ausgeführt ist. Der ortsfest um den Lagerzapfen rotierende Flügel erzeugt keine freien Massenkräfte.

Ein weiteres bevorzugtes Ausführungsbeispiel der Vakuumpumpe ist dadurch gekennzeichnet, dass ein Ende des Lagerzapfens drehbar in dem Mittelpunkt des Flügels angeordnet ist. Vorzugsweise ist der Flügel mit einem zentralen Sackloch zur Aufnahme des zugehörigen Endes des Lagerzapfens ausgestattet. Der Lagerzapfen kann auch fest im Flügel angeordnet beziehungsweise mit diesem verbunden sein.

Ein weiteres bevorzugtes Ausführungsbeispiel der Vakuumpumpe ist dadurch gekennzeichnet, dass das andere Ende des Lagerzapfens in einem weiteren Exzenterelement angeordnet ist. Vorzugsweise ist das weitere Exzenterelement mit einem Sackloch zur Aufnahme des zugehörigen Endes des Lagerzapfens ausgestattet. Der Lagerzapfen kann auch drehbar in dem weiteren Exzenterelement angeordnet sein.

Ein weiteres bevorzugtes Ausführungsbeispiel der Vakuumpumpe ist dadurch gekennzeichnet, dass das weitere Exzenterelement als Exzenterachse ausgeführt ist, auf der das Pumpengehäuseteil drehbar gelagert ist. Vorzugsweise ist radial zwischen der Exzenterachse und dem Pumpengehäuseteil eine Lagereinrichtung, zum Beispiel ein Wälzlager, angeordnet.

Alternativ kann auch ein Rotorlagerzapfen als Achse ausgeführt sein, auf der das Gehäuseteil drehbar gelagert oder angetrieben ist.

Ein weiteres bevorzugtes Ausführungsbeispiel der Vakuumpumpe ist dadurch gekennzeichnet, dass die Umlaufkontur mittelbar oder unmittelbar an einem beziehungsweise dem Gehäuseteil vorgesehen ist, das exzentrisch zu dem konstruktiven Mittelpunkt der Umlaufkontur drehbar angetrieben ist. Im Unterschied zu herkömmlichen Vakuumpumpen erfolgt der Antrieb gemäß einem Aspekt der Erfindung nicht durch den Rotor, sondern durch das Gehäuseteil. Die Exzentereinrichtung beziehungsweise die Exzenterelemente, der Rotor und die Umlaufkontur wirken kinematisch so zusammen, dass der Flügel dem Gehäuseteil mit halber Gehäuseteildrehzahl beziehungsweise Antriebsdrehzahl folgt. Die kinematische Halbierung der Antriebsdrehzahl reduziert die Konturkräfte und Relativgeschwindigkeiten an den Flügelenden beziehungsweise an dort angebrachten Gleitkappen. Daher kann auch bei hohen Antriebsdrehzahlen auf ein Untersetzungsgetriebe verzichtet werden.

Ein weiteres bevorzugtes Ausführungsbeispiel der Vakuumpumpe ist dadurch gekennzeichnet, dass das Gehäuseteil mittelbar oder unmittelbar an einem Gehäuseumfang oder Gehäuseteilumfang von einem Umschlingungsmittel angetrieben ist. Bei dem Umschlingungsmittel handelt es sich vorzugsweise um einen Riemen.

Ein weiteres bevorzugtes Ausführungsbeispiel der Vakuumpumpe ist dadurch gekennzeichnet, dass die Drehachse des Rotors exzentrisch zur Drehachse des Gehäuseteils angeordnet ist. Vorzugsweise fällt die Drehachse des Rotors mit dem konstruktiven Mittelpunkt der Umlaufkontur zusammen.

Ein weiteres bevorzugtes Ausführungsbeispiel der Vakuumpumpe ist dadurch gekennzeichnet, dass die Umlaufkontur als Konchoide ausgeführt ist. Der Flügel folgt, im kinematischen Zusammenwirken von der Exzentereinrichtung, beziehungsweise dem Exzenterelement, dem Rotor und der Umlaufkontur, dem Funktionsverlauf der Konchoide mit halber Gehäuseteildrehzahl.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine schematische Darstellung einer erfindungsgemäßen Vakuumpumpe mit einem Gehäusewinkel von null Grad und einem Flügelwinkel von null Grad.;
- Figur 2: die Vakuumpumpe aus Figur 1 bei einem Gehäusewinkel von 90 Grad und einem Flügelwinkel von 45 Grad;
- Figur 3: die Vakuumpumpe aus den Figuren 1 und 2 bei einem Gehäusewinkel von 180 Grad und einem Flügelwinkel von 90 Grad;
- Figur 4: ein Ausführungsbeispiel der Vakuumpumpe im Querschnitt;
- Figur 5: den gleichen Querschnitt wie in Figur 4 mit einem um 90 Grad verdrehten Flügel;
- Figur 6: die Vakuumpumpe aus Figur 4 im Längsschnitt und
- Figur 7: die Vakuumpumpe aus Figur 5 im Längsschnitt.

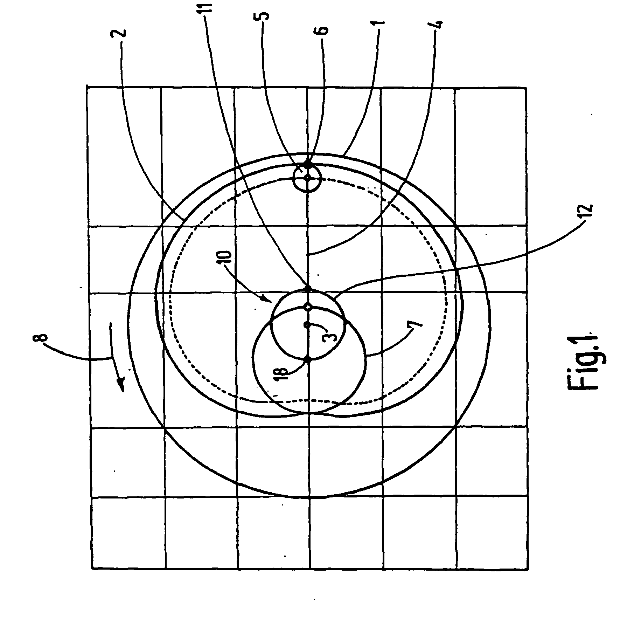

In den Figuren 1 bis 3 ist jeweils eine Vakuumpumpe schematisch im Querschnitt bei verschiedenen Gehäusewinkeln und Flügelwinkeln dargestellt. Die Vakuumpumpe umfasst ein drehbares Pumpengehäuse 1, das innen mit einer Umlaufkontur 2 ausgestattet ist, die als Konchoide ausgeführt ist. Der konstruktive Mittelpunkt der Konchoide ist in den Figuren 1 bis 3 mit 18 bezeichnet. Das Pumpengehäuse 1 mit der Umlaufkontur 2 ist um eine Drehachse 3 drehbar, die exzentrisch zu dem Mittelpunkt 18 der Konchoide beziehungsweise der Umlaufkontur 2 angeordnet ist. Das Pumpengehäuse 1 kann aber auch drehbar um den Mittelpunkt 18 der Konchoide gelagert und/oder angetrieben sein.

Innerhalb der Umlaufkontur 2 ist ein Flügel 4 geführt, dessen Flügelenden mit Gleitkappen 5 ausgestattet sind, von denen in den Figuren 1 bis 3 nur jeweils eine Gleitkappe 5 dargestellt ist. Die an den Flügelenden angebrachten Gleitkappen 5 haben an einem Konturberührpunkt 6 ständig Kontakt mit der Umlaufkontur 2. Der Flügel 4 ist in einem Flügelschlitz eines Rotors 7 linear hin und her bewegbar geführt. Der Flügel 4 kann durch den Rotor 7 oder eine Exzentereinrichtung 10 angetrieben sein. Gemäß einem bevorzugten Ausführungsbeispiel der Erfindung ist der innerhalb der Umlaufkontur 2 und in dem Rotor 7 geführte Flügel 4 der Vakuumpumpe jedoch durch das Pumpengehäuse 1 angetrieben. Die Antriebsdrehrichtung ist durch einen Pfeil 8 angegeben. Das Pumpengehäuse 1 wird zum Antrieb des Flügels 4 gegen den Uhrzeigersinn um die Drehachse 3 verdreht.

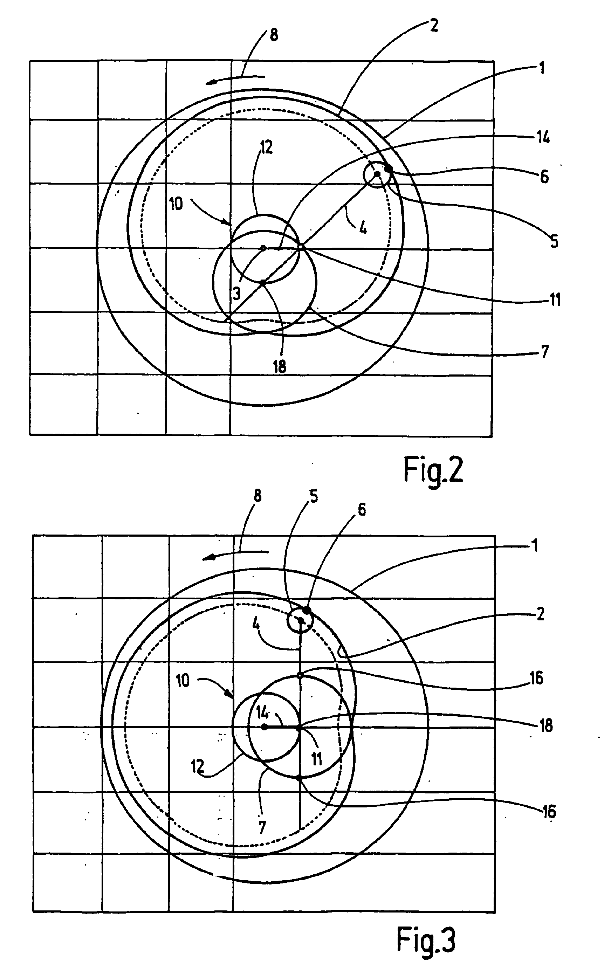

Der Flügel 4 ist mit der Exzentereinrichtung 10 gekoppelt, die ein erstes Exzenterelement 11 und ein zweites Exzenterelement 12 umfasst. Bei dem ersten Exzenterelement 11 handelt es sich um einen exzentrischen Lagerzapfen, der axial an den Mittelpunkt des Flügels 4 angelenkt ist. Bei dem zweiten Exzenterelement 12 handelt es sich um eine Exzenterachse, deren Längsachse mit der Drehachse 3 zusammenfällt. Die beiden Exzenterelemente 11, 12 sind hier beispielhaft durch eine Koppelstange dargestellt. Der zugehörige Exzenterradius ist mit 14 bezeichnet. Die Linearführung des Flügels 4 in dem Rotorschlitz ist in Figur 3 mit 16 bezeichnet.

Das Pumpengehäuse 1 wird am Gehäuseumfang, zum Beispiel durch mindestens einen Riemen, in der Drehrichtung 8 angetrieben und ist auf der Exzenterachse 12 um die Drehachse 3 drehbar gelagert. Der Drehwinkel des Pumpengehäuses 1 wird als Gehäusewinkel bezeichnet. Der Drehwinkel des Flügels 4 wird als Flügelwinkel bezeichnet. In Figur 1 betragen der Gehäusewinkel und der Flügelwinkel null Grad. In Figur 2 beträgt der Gehäusewinkel 90 Grad und der Flügelwinkel 45 Grad. In Figur 3 beträgt der Gehäusewinkel 180 Grad und der Flügelwinkel 90 Grad.

Die Exzenterachse 12 ist an dem Pumpengehäuse 1, zum Beispiel an einem Pumpenflansch des Pumpengehäuses 1, befestigt. Durch den Lagerzapfen 11 ist die Exzenterachse 12 mit dem Mittelpunkt des Flügels 4 gekoppelt. Bei einem Umlauf des Pumpengehäuses 1 um die Drehachse 3 rotiert der Flügel 4 um den Lagerzapfen 11 und wird gleichzeitig in dem Rotor 7 und in der Umlaufkontur 2 der Konchoide zwangsgeführt. Der Rotor 7 ist exzentrisch, mit Abstand des Exzenterradius 14, zur Drehachse 3 beziehungsweise der Exzenterachse 12 in dem rotierenden Pumpengehäuse 1 gelagert. Beim Umlauf des Pumpengehäuses 1 überstreicht der exzentrisch rotierende Rotor 7 einmal pro Umdrehung den ortsfesten exzentrischen Lagerzapfen 11 des Flügels 4.

Die Freiheitsgrade des Flügels 4 werden im Lagerzapfen 11 der Exzenterachse 12, in der Linearführung 16 des Rotors 7 und in den Konturberührungspunkten 6 der Gleitkappen 5 an den Flügelenden definiert. Der Flügel folgt, im kinematischen Zusammenwirken von Lagerzapfen 11, Rotor 7 und Umlaufkontur 2, dem Funktionsverlauf der Konchoide 2 mit halber Antriebsdrehzahl. Die kinematische Halbierung der Antriebsdrehzahl reduziert die Konturkräfte und Relativgeschwindigkeiten an den Gleitkappen 5 und erlaubt den Verzicht auf ein Untersetzungsgetriebe bei hohen Antriebsdrehzahlen. Der ortsfest um den Lagerzapfen 11 rotierende Flügel 4 erzeugt keine freien Massenkräfte. Die Massenverteilung der Vakuumpumpe kann vollständig am Pumpengehäuse 1 ausgeglichen werden, zum Beispiel durch Auswuchten. Die Entlastung der Konturkräfte an den Flügelenden durch Lagerung des Flügels 4 und kinematische Untersetzung erweitert den Einsatzbereich der Vakuumpumpe.

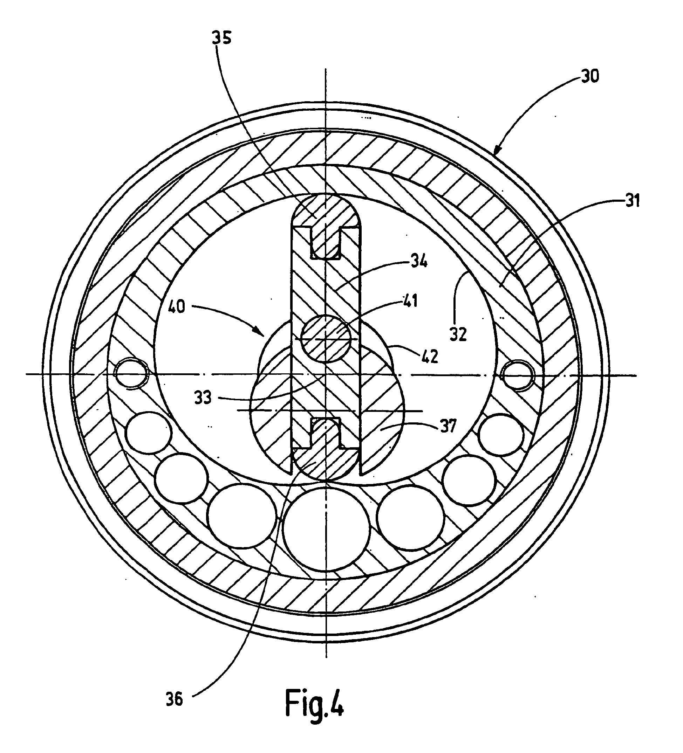

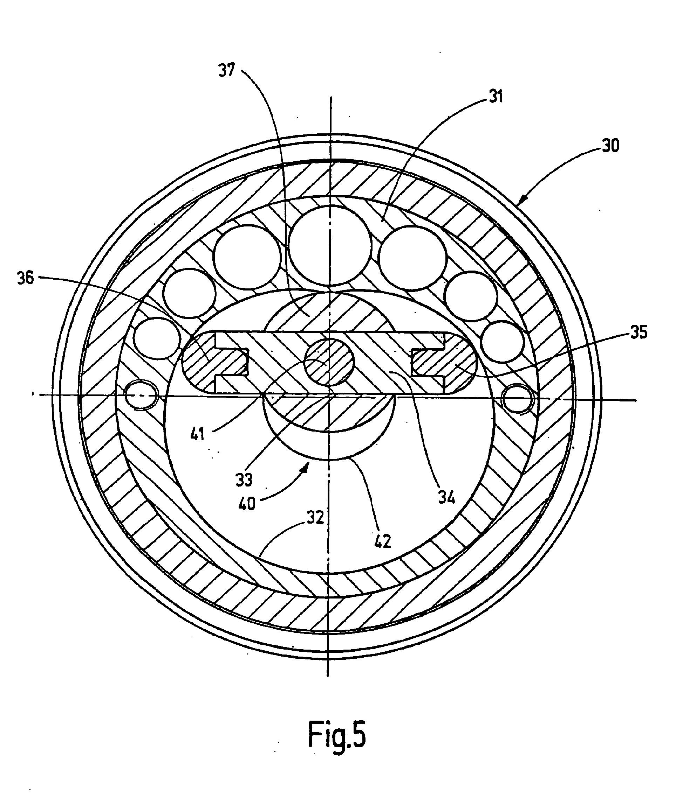

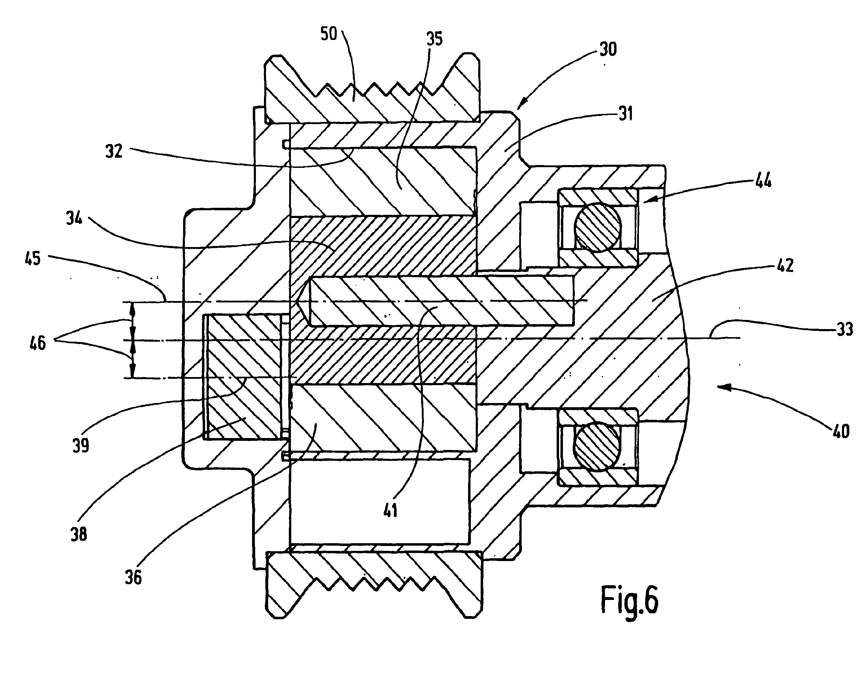

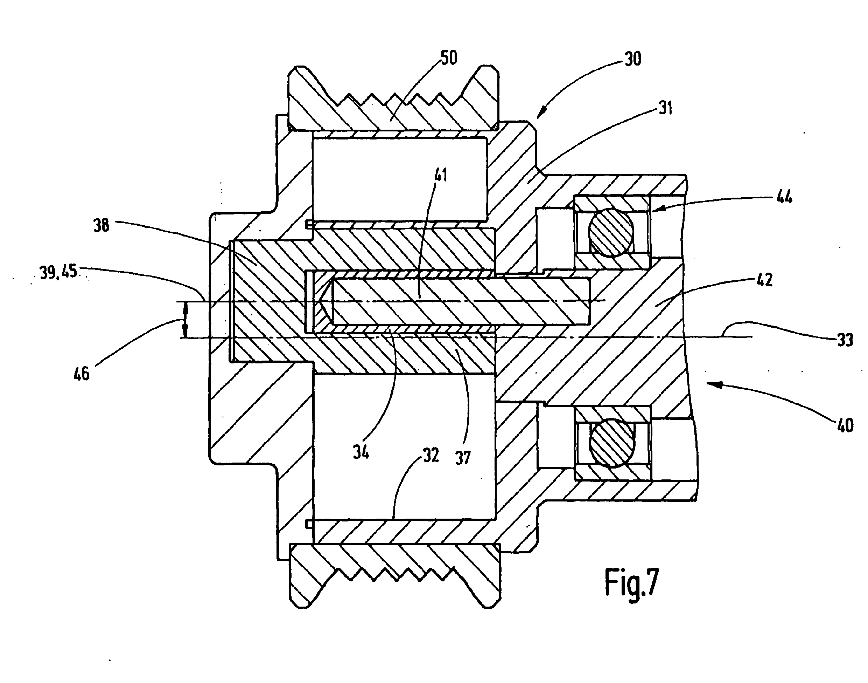

In den Figuren 4 bis 7 ist ein Ausführungsbeispiel einer Vakuumpumpe 30, wie sie in den Figuren 1 bis 3 schematisch dargestellt ist, in verschiedenen Ansichten und Betriebsstellungen dargestellt. Die Vakuumpumpe 30 umfasst ein Pumpengehäuse 31, das radial innen, zum Beispiel an einem Hubring, eine Umlaufkontur 32 aufweist, die als Konchoide ausgeführt ist. Das Pumpengehäuse 31 ist um eine Drehachse 33 drehbar gelagert. Innerhalb der Umlaufkontur 32 ist ein Flügel 34 geführt, an dessen Flügelenden Gleitkappen 35, 36 angebracht sind, die an der Umlaufkontur 32 anliegen. Der Flügel 34 ist linear in einen Flügelschlitz eines Rotors 37 hin und her bewegbar geführt. Der Rotor 37 wiederum weist, wie man in Figur 7 sieht, einen Rotorlagerzapfen 38 auf, durch den der Rotor 37 um eine Rotordrehachse 39, die auch als Lagerzapfenachse bezeichnet wird, drehbar gelagert ist.

Der Rotor 37 kann, wie bei herkömmlichen Vakuumpumpen, angetrieben sein. Gemäß einem Aspekt der Erfindung ist der Rotor 37 jedoch über eine Exzentereinrichtung 40 angetrieben, die ein erstes Exzenterelement 41 und ein zweites Exzenterelement 42 umfasst. Das erste Exzenterelement 41 ist als Lagerzapfen mit einer Längsachse 45 ausgeführt, dessen eines Ende in den Flügel 34 und dessen anderes Ende in das zweite Exzenterlement 42 eingreift, das als Exzenterachse ausgeführt ist.

Auf der feststehenden Exzenterachse 42 ist mit Hilfe einer Lagereinrichtung 44 das Pumpengehäuse 31 drehbar um die Drehachse 33 gelagert. Die Längsachse oder Rotordrehachse 39 des Rotorlagerzapfens 38 ist um einen Exzenterradius 46 exzentrisch zu der Drehachse 33 des Pumpengehäuses 31 angeordnet. Die Längsachse 45 des Exzenterelements 41 ist ebenfalls um den Exzenterradius 46 exzentrisch zu der Drehachse 33 des Pumpengehäuses 31 angeordnet. Radial außen ist an dem Pumpengehäuse 31 eine Riemenscheibe 50 befestigt, die teilweise von einem (nicht dargestellten) Riemen oder von mehreren Riemen umschlungen ist. Durch den beziehungsweise die Riemen wird das Pumpengehäuse 31 um die Drehachse 33 in Drehung versetzt. Der kinematische Zusammenhang zwischen der Drehung des Pumpengehäuses 31 und der Bewegung des Flügels 34 ist vorab an Hand des in den Figuren 1 bis 3 schematisch dargestellten Ausführungsbeispiels erläutert.

Wenn sich das Pumpengehäuse 1; 31 um die Drehachse 3; 33 dreht, dann dreht sich der Flügel 4; 34 mit halber Antriebsdrehzahl um den Lagerzapfen 11; 41, wobei sich der Flügel 4; 34 gleichzeitig in dem Rotor 7; 37 beziehungsweise dem Rotorschlitz innerhalb der Umlaufkontur 2; 32 hin und her bewegt. Dabei kommt es in einem Saugraum innerhalb des Pumpengehäuses 1 zu einer Volumenvergrößerung, die ein Ansaugen eines Arbeitsmediums, insbesondere von Luft beziehungsweise einem Luft-Öl-Gemisch, in den Saugraum bewirkt. Gleichzeitig kommt es in einem Druckraum innerhalb des Pumpengehäuses 1 zu einer Volumenabnahme, die ein Fördern des Arbeitsmediums aus dem Druckraum bewirkt.

Die Erfindung betrifft insbesondere Vakuumpumpen und ermöglicht Betriebsdrehzahlen, die größer als 5000 Umdrehungen pro Minute sind. Die Erfindung ist besonders geeignet für Vakuumpumpen mit Riemenscheibenantrieb beziehungsweise Vakuumpumpen mit rotierendem Gehäuse.

### Bezugszeichenliste

| | | | |
|---|---|---|---|
| 1 | Pumpengehäuse | 42 | Exzenterelement => Exzenterachse |
| 2 | Umlaufkontur | 44 | Lagereinrichtung |
| 3 | Drehachse | 45 | Längsachse |
| 4 | Flügel | 46 | Exzenterradius |
| 5 | Gleitkappe | 50 | Riemenscheibe |
| 6 | Konturberührpunkt | | |
| 7 | Rotor | | |
| 8 | Antriebsdrehrichtung | | |
| 10 | Exzentereinrichtung | | |
| 11 | Exzenterelement => Lagerzapfen | | |
| 12 | Exzenterelement => Exzenterachse | | |
| 14 | Exzenterradius | | |
| 16 | Linearführung | | |
| 18 | Mittelpunkt | | |
| 30 | Vakuumpumpe | | |
| 31 | Pumpengehäuse | | |
| 32 | Umlaufkontur | | |
| 33 | Drehachse | | |
| 34 | Flügel | | |
| 35 | Gleitkappe | | |
| 36 | Gleitkappe | | |
| 37 | Rotor | | |
| 38 | Rotorlagerzapfen | | |
| 39 | Rotordrehachse | | |
| 40 | Exzentereinrichtung | | |
| 41 | Exzenterelement => Lagerzapfen | | |

## Patentansprüche

1. Vakuumpumpe, insbesondere Flügelzellenpumpe, mit einem Rotor (7;37), der um eine Drehachse drehbar ist und durch den ein Flügel (4;34) in einer, bezogen auf den Rotor (7;37), radialen Richtung hin und her bewegbar innerhalb einer Umlaufkontur (2;32) geführt ist, wobei der Flügel (4;34) mit einer Exzentereinrichtung (10;40) gekoppelt ist, die exzentrisch zu dem konstruktiven Mittelpunkt (18) der Umlaufkontur (2;32) angeordnet ist, **dadurch gekennzeichnet, dass** ein Rotorlagerzapfen (38) als Achse ausgeführt ist, auf der ein Gehäuseteil (1;31) drehbar gelagert oder angetrieben ist, wobei eine Umlaufkontur (2;32) an dem Gehäuseteil (1;31) vorgesehen ist, das exzentrisch zu dem konstruktiven Mittelpunkt (18) der Umlaufkontur (2;32) drehbar angetrieben ist.

2. Vakuumpumpe nach Anspruch 1, **dadurch gekennzeichnet, dass** die Exzentereinrichtung (10;40) ein Exzenterelement (11;41) umfasst, das an den Mittelpunkt des Flügels (4;34) angelenkt ist.

3. Vakuumpumpe nach Anspruch 2, **dadurch gekennzeichnet, dass** das Exzenterelement (11;41) als Lagerzapfen für den Flügel (4;34) ausgeführt Ist.

4. Vakuumpumpe nach Anspruch 3, **dadurch gekennzeichnet, dass** ein Ende des Lagerzapfens (11;41) drehbar in dem Mittelpunkt des Flügels (4;34) angeordnet ist.

5. Vakuumpumpe nach Anspruch 4, **dadurch gekennzeichnet, dass** das andere Ende des Lagerzapfens (11;41) in einem weiteren Exzenterelement (12;42) angeordnet ist.

6. Vakuumpumpe nach Anspruch 5, **dadurch gekennzeichnet, dass** das weitere Exzenterelement (12;42) als Exzenterachse ausgeführt ist, auf der das Pumpengehäuseteil (1;3j) drehbar gelagert oder angetrieben ist.

7. Vakuumpumpe nach einem der vorhergehenden Ansprüche, **dadurch gekennzeichnet, dass** das Gehäuseteil (1;31) an einem Gehäuseumfang oder Gehäuseteilumfang von einem Umschlingungsmittel angetrieben ist.

8. Vakuumpumpe nach einem der vorhergehenden Ansprüche, **dadurch gekennzeichnet, dass** die Drehachse des Rotors (7;37) im konstruktiven Mittelpunkt (18) der Umlaufkontur (2;32) angeordnet ist.

9. Vakuumpumpe nach einem der Ansprüche 1 bis 7, **dadurch gekennzeichnet, dass** die Drehachse des Rotors (7;37) exzentrisch zu dem konstruktiven Mittelpunkt (18) der Umlaufkontur (2;32) angeordnet ist.

10. Vakuumpumpe nach einem der vorhergehenden Ansprüche, **dadurch gekennzeichnet, dass** die Umlaufkontur (2;32) als Konchoide ausgeführt ist.

## Claims

1. Vacuum pump, more particularly a vane-type pump, with a rotor (7; 37) which is capable of rotating about a rotational axis and through which a vane (4;34) is guided movable to and fro within a circumferential contour (2;32) in a radial direction in relation to the rotor (7;37), wherein the vane (4; 34) is coupled to an eccentric mechanism (10; 40) which is mounted eccentrically relative to the structural centre point (18) of the circumferential contour (2; 32), **characterised in that** a rotor bearing pivot (38) is designed as the axis on which a housing part (1 ; 31) is mounted or driven for rotation wherein a circumferential contour (2; 32) is provided on the housing part (1; 31) which is driven in rotation eccentrically relative to the structural centre point (18) of the circumferential contour (2; 32).

2. Vacuum pump according to claim 1 **characterised in that** the eccentric mechanism (10; 40) comprises an eccentric element (11; 41) which is connected to the centre point of the vane (4; 34).

3. Vacuum pump according to claim 2 **characterised in that** the eccentric element (11; 41) is designed as a bearing pivot for the vane (4; 34).

4. Vacuum pump according to claim 3 **characterised in that** one end of the bearing pivot (11; 41) is mounted rotatable in the centre point of the vane (4; 34).

5. Vacuum pump according to claim 4 **characterised in that** the other end of the bearing pivot (11; 41) is mounted in a further eccentric element (12; 42).

6. Vacuum pump according to claim 5 **characterised in that** the further eccentric element (12; 42) is designed as an eccentric axis on which the pump housing part (1; 31) is mounted or driven in rotation.

7. Vacuum pump according to one of the preceding claims **characterised in that** the housing part (1; 31) is driven by a belt contact means on a housing periphery or housing part periphery.

8. Vacuum pump according to one of the preceding claims **characterised in that** the axis of rotation of the rotor (7; 37) is mounted in the structural centre point (18) of the circumferential contour (2; 32).

9. Vacuum pump according to one of claims 1 to 7 **characterised in that** the axis of rotation of the rotor (7; 37) is mounted eccentric relative to the structural centre point (18) of the circumferential contour (2; 32).

10. Vacuum pump according to one of the preceding claims **characterised in that** the circumferential contour (2; 32) is designed as a conchoid.

## Revendications

1. Pompe à vide, en particulier pompe à palettes, avec un rotor (7 ; 37) qui peut tourner autour d'un axe de rotation et par lequel une palette (4 ; 34) est guidée à l'intérieur d'un contour circulaire (2 ; 32) selon un mouvement de va-et-vient dans un sens radial par rapport au rotor (7 ; 37), la palette (4 ; 34) étant couplée à un dispositif excentrique (10 ; 40) qui est disposé de façon excentrique par rapport au point central de la construction (18) du contour circulaire (2 ; 32), **caractérisée en ce qu'**un bout d'arbre de rotor (38) est réalisé sous forme d'axe, sur lequel un élément de carter (1 ; 31) est entraîné ou logé de manière rotative, un contour circulaire (2 ; 32) étant prévu au niveau de l'élément de carter (1 ; 31) qui est entraîné de manière rotative de façon excentrique par rapport au point central de la construction (18) du contour circulaire (2 ; 32).

2. Pompe à vide selon la revendication 1, **caractérisée en ce que** le dispositif excentrique (10 ; 40) comprend un élément excentrique (11 ; 41) qui est articulé sur le point central de la palette (4 ; 34).

3. Pompe à vide selon la revendication 2, **caractérisée en ce que** l'élément excentrique (11 ; 41) est réalisé sous forme de bout d'arbre pour la palette (4 ; 34).

4. Pompe à vide selon la revendication 3, **caractérisée en ce qu'**une extrémité du bout d'arbre (11 ; 41) est disposée de manière rotative au point central de la palette (4 ; 34).

5. Pompe à vide selon la revendication 4, **caractérisée en ce que** l'autre extrémité du bout d'arbre (11 ; 41) est disposée dans un autre élément excentrique (12 ; 42).

6. Pompe à vide selon la revendication 5, **caractérisée en ce que** l'autre élément excentrique (12 ; 42) est réalisé sous forme d'axe excentrique sur lequel l'élément de carter de la pompe (1 ; 31) est entraîné ou logé de manière rotative.

7. Pompe à vide selon l'une quelconque des revendications précédentes, **caractérisée en ce que** l'élément de carter (1 ; 31) est entraîné au niveau d'une périphérie du carter ou d'une périphérie de l'élément de carter par un moyen entourant.

8. Pompe à vide selon l'une quelconque des revendications précédentes, **caractérisée en ce que** l'axe de rotation du rotor (7 ; 37) est disposé au point central de la construction (18) du contour circulaire (2 ; 32).

9. Pompe à vide selon l'une quelconque des revendications 1 à 7, **caractérisée en ce que** l'axe de rotation du rotor (7 ; 37) est disposé de façon excentrique par rapport au point central de la construction (18) du contour circulaire (2 ; 32).

10. Pompe à vide selon l'une quelconque des revendications précédentes, **caractérisée en ce que** le contour circulaire (2 ; 32) est réalisé sous forme de conchoïde.
